(19) Europäisches Patentamt
European Patent Office
Office européen des brevets

(11) **EP 2 383 899 B1**

(12) **EUROPEAN PATENT SPECIFICATION**

(45) Date of publication and mention
of the grant of the patent:
**06.03.2013 Bulletin 2013/10**

(51) Int Cl.:
***H04B 3/46*** *(2006.01)*  ***H04M 3/34*** *(2006.01)*

(21) Application number: **10305466.4**

(22) Date of filing: **30.04.2010**

(54) **A method for determining a noise level on a data transmission line, and associated devices**

Verfahren zur Bestimmung eines Rauschpegels an einer Datenübertragungsleitung und zugehörige Vorrichtungen

Procédé de détermination du niveau de bruit dans un circuit de transmission de données et dispositifs associés

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**02.11.2011 Bulletin 2011/44**

(73) Proprietor: **Alcatel Lucent**
**75007 Paris (FR)**

(72) Inventor: **Drooghaag, Benoit**
**1421, Ophain-Bois-Siegneur-Isaac (BE)**

(74) Representative: **ALU Antw Patent Attorneys**
**Copernicuslaan 50**
**2018 Antwerpen (BE)**

(56) References cited:
**US-A1- 2005 123 027      US-A1- 2008 151 742**
**US-A1- 2009 323 903      US-B1- 6 760 847**

**Description**

Technical field of the invention

The present invention relates to the field of methods and devices for determining a noise level on a data transmission line, in particular a DSL line.

Background of the invention

Today, the noise level on a DSL transmission line is measured, but the parameters used to express this are relatively complex and are difficult to be determined in a quick way.

In the carrier data, which are frequency dependent, the standardized [ITU-T Rec. G.993.2 §11.4.1.1.2] Quiet Line Noise (QLN) (noise on the transmission line when the line is not carrying a data signal) is measured and is represented as a frequency dependent vector. It corresponds to the noise power spectral density expressed in dBm/Hz for each carrier, i.e. for each discrete frequency used for the transmission of data.

This situation has a substantial disadvantage, as in a practical field deployment, the main noise source impacting a DSL line is the Far-End Crosstalk (FEXT).

This FEXT noise power depends on several factors, including the number of neighboring lines (hereafter called number of disturbers), but also the loop length, i.e. the distance between a central office (CO) and a customer premises equipment (CPE).

This relationship between noise power and loop length prevents an easy and quick determination of whether a DSL line comprises an abnormal noise level.

There is a need for methods and devices which are capable of providing an indication of whether a transmission line comprises an abnormal noise level.

In US 6,760,847 to identify interference from other data carrying subscriber loops, a power spectral density sample is obtained from the subscriber loop under consideration based on at least one measurement while the loop is not transmitting data. The sample power spectral density is then correlated with each one of a set of known power spectral densities. Based on the correlations, subscriber loop disturbers may be recognized.

In US 2009/0323903 a method for characterising noise associated with a DSL link is described.

Summary of the invention

It is an object of the present invention to provide methods and devices which solve at least one of the above problems.

This is achieved by the features of claims 1 and 8.

According to a first aspect of the present invention a method is disclosed for determining a noise level on a data transmission line having a certain length, in particular on a DSL line, comprising:

- measuring parameter values of the data transmission line;
- receiving the parameter values by a computing means;
- extracting a scalar value representing a degree of electromagnetic interference on the transmission line from the parameter values, the scalar value being independent of the line length, by the computing means;
- displaying the scalar value on a graphical user interface.

According to embodiments of the first aspect of the present invention, the scalar value corresponds roughly with a number of disturbers.

According to embodiments of the first aspect of the present invention, the measuring of parameter values comprises measuring the power spectral density of the noise as a function of frequency for the line, the noise being present when the data transmission line is not carrying a data signal, and measuring the transfer function for the line.

According to embodiments of the first aspect of the present invention, the extraction of a scalar value comprises fitting the parameter values into a predetermined model which allows separating line-length dependent information from line-length independent information.

According to embodiments of the first aspect of the present invention, the method further comprises deriving an estimate of the line length based on the line-length dependent information.

According to alternative embodiments of the first aspect of the present invention, measuring parameter values comprises measuring transmitted power, noise margin, actual bitrate and line attenuation.

According to these alternative embodiments of the first aspect of the present invention, extracting the scalar parameter can comprise

- determining a transmitted power spectral density based on at least the transmitted power;
- determining a transfer function for the line based on at least the line attenuation;
- determining a number of disturbers based on at least the transmitted power spectral density and the transfer function of the line.

According to a second aspect of the present invention a computing means is disclosed for determining a noise level on a data transmission line having a certain length, in particular on a DSL line, the computing means being adapted for:

- receiving parameter values of the data transmission line;
- extracting a scalar value representing a degree of electromagnetic interference on the transmission line from the parameter values, the scalar value being independent of the line length, by the computing means;
- outputting the scalar value towards a graphical user interface;

According to embodiments of the second aspect of the present invention, the computing means can be further adapted for fitting the parameter values into a predetermined model thereby separating line length dependent information from line-length independent information, when the parameter values comprise a power spectral density of the noise as a function of frequency for the line, the noise being present when the data transmission line is not carrying a data signal, and a transfer function for the line.

According to embodiments of the second aspect of the present invention, the computing means is further adapted for deriving an estimate of the line length based on the line-length dependent information.

According to embodiments of the second aspect of the present invention, the computing means is further adapted for, when the parameter values comprise transmitted power, noise margin, actual bit rate and line attenuation:

- determining a transmitted power spectral density based on at least the transmitted power;
- determining a transfer function for the line based on at least the line attenuation;
- determining a number of disturbers based on at least the transmitted power spectral density, the transfer function of the line, the noise margin, and the actual bitrate.

Further aspects of the present invention are described by the dependent claims. The features from the dependent claims, features of any of the independent claims and any features of other dependent claims may be combined as considered appropriate to the person of ordinary skill, and not only in the particular combinations as defined by the claims.

Brief description of the drawings

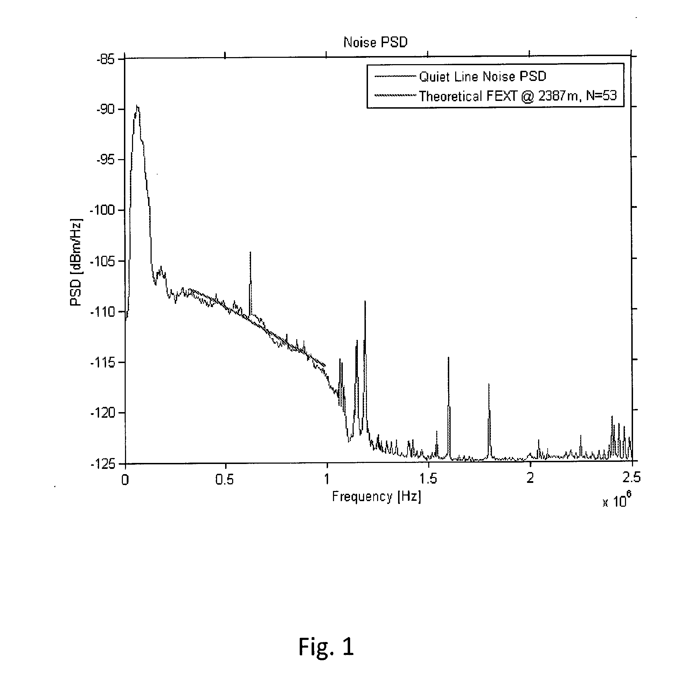

Fig. 1 illustrates a first embodiment of the present invention, wherein an equivalent number of disturbers is determined by a curve fitting technique on the power density spectrum of said noise known as Quite Line Noise.

Description of illustrative embodiments

The description of aspects of the present invention is performed by means of particular embodiments and with reference to a drawing but the invention is not limited thereto.

The Far end crosstalk (FEXT) power spectral density (PSD) is usually modeled by the following equation for instance (as defined in ITU-T Rec. G.996.1 §7.4.1):

$$Fext(f, L, Ndist) = DistPSD(f) + \text{Hlog}(f) + 10.\log_{10}(7,74.10^{21}.Ndist^{0.6}.L.f^2)$$

written differently

$$Fext(f, L, Ndist) = DistPSD(f) + \text{Hlog}(f) + 10.\log_{10}(7,74.10^{21}.L.f^2) + 10.\log_{10}(Ndist^{0.6})$$

or

$$Fext(f, L, Ndist) = Fext\_shape(f, L) + 6.\log_{10}(Ndist)$$

When f is the frequency in Hz, L is the line length in feet, Ndist is an equivalent number of disturbers, DistPSD(f) is the disturber Power Spectral Density (PSD) in dBm/Hz and Hlog is the transfer function in dB for instance (as defined in ITU-T Rec. G.993.2 §11.4.1.1.1), which is representative for the channel attenuation.

It shows that the FEXT PSD can be decomposed in two terms: a first one determining the spectral shape, depending on the loop length and the frequency, and a second term determining an offset, depending only on an equivalent number of disturbers.

In embodiments of the present invention, the noise power is quantified in terms of the number of equivalent disturbers (Ndist), instead of in terms of total noise power in dBm or mW, which is the case in the prior art.

In a first embodiment of the present invention, the estimation of the number of disturbers (Ndist) is based on carrier data, i.e. on frequency dependent data.

When the carrier data collection is performed in a state of the art network, the Quite Line Noise (QLN), being the power spectral density of the noise when the transmission line is not carrying a noise signal, can be retrieved from a DSL modem. Also the transfer function, represented by the Hlog parameter being representative of the line attenuation, can be retrieved from the modem.

These parameters being available, and assuming a predetermined typical disturbers PSD (power spectral density of neighboring lines), the modeling equations given above can be used with any curve fitting technique to identify the best L and Ndist values. Those values should make the FEXT model fit to the measured QLN. Preferably, the fit is carried out only on the frequency range where the FEXT is significantly above the receiver noise floor, being the level below which the modem/receiver is not capable of measuring a signal. This is typically near the beginning of the downstream band. This is illustrated in Figure 1, where the fit results in a line length of 2,387km and an equivalent number of disturbers of 53.

According to a second embodiment of the present invention, an estimation of an equivalent number of disturbers (Ndist) is based on operational data (scalar parameters not dependent on frequency).

Assume that the following input parameter values are available:

- Transmitted power : TxPower [dBm] (for instance as defined in ITU-T Rec. G.993.2 §11.4.1.1.8)
- Noise margin : NM [dB] [also called Signal-to-Noise margin, for instance as defined in ITU-T Rec. G.993.2 §11.4.1.1.6]
- Actual bitrate : actBR [kbps/s] (hereafter supposed to be equal to the attainable net data rate as for instance defined in ITU-T Rec. G.993.2 §11.4.1.1.7)
- Loop attenuation : LATN [dB] (as for instance defined in ITU-T Rec. G.993.2 §11.4.1.1.4)

Moreover the following assumptions can be made:

- Transmitted PSD mask (i.e. the maximum power spectral density of the transmitted signal given for each frequency) is known (depending on the DSL technology type (ADSL1/ADSL2/ADSL2+/ReADSL/VDSL/VDSL2, ...)): TxMask [dBm/Hz]

- Cable lineic attenuation : $\alpha(f) = k\sqrt{f}$ with typically k = 2.45e-6 Np/km √Hz for a transmission line of the AWG24 type.
- The quiet line noise is dominated by FEXT, and limited by a flat receiver noise floor.

First, the transmitted PSD (in dBm/Hz) can be determined based on, or at least on, the transmitted power [dBm] assuming a any water-filling Algorithm (a simple flat water-filling algotihm is hereafter supposed).

The maxPSD (highest power spectral density of the signal within the full signal bandwidth) parameter is determined that satisfies the constraint :

$$10.\log_{10}\left(\sum_{i \in carriers} 10^{\frac{TxPSD_i}{10}}.\Delta f\right) = TxPower$$

knowing that :

$$TxPSD_i = \min(\max PSD, TxMask_i)$$

where $\Delta f$ is the carrier spacing (typically 4.3125kHz), $TxMask_i$ is the Transmitted PSD mask, and $TxPSD_i$ is the Transmitted signal PSD.

Then, the transfer function Hlog (and line length L) can be determined based on, or at least on, the line attenuation.

A line length L value (in km) can be determined that satisfies the constraint :

$$-10.\log_{10}(\frac{1}{N}\sum_{i=1}^{N}|H(f_i)|^2) = LATN$$

knowing that :

$$\alpha(f) = k.\sqrt{f}$$

$$|H(f)| = e^{-\alpha(f).L}$$

Note that this step can be bypassed if the loop length is already known, for instance if they are measured via SELT or NBLT (MELT).
SELT (Singled-Ended Line Test) is a reflectometry technique consisting in sending an incident signal to the line and measuring the corresponding reflected signal (echo). This can be used to measure the loop length by measuring the time used by the signal to reach the end of the line and to come back to the transmitter, knowing the velocity of propagation of the signal on the line.

MELT (MEtallic Line Test) is a classical technique consisting in measuring electrical parameters (voltage, resistance, capacitance, ...) between the wires of a data transmission line. As there is a direct relationship between the loop length and the capacitance between the 2 wires of a twisted-pair cable (roughly 50nF/km), the loop length can be derived from the capacitance measurement.

Then the equivalent number of disturbers that are needed to explain the actual bitrate is derived.

Therefore the value for Ndist is determined that satisfies the constraint :

$$\sum_{i=1}^{N}\log_2(1+10^{\frac{SNR(f_i)-NM-SNRgap}{10}}).4 = actBR$$

knowing that :

$$RxPSD(f) = TxPSD(f) + \mathrm{Hlog}(f)$$

$$FextPSD(f) = TxPSD(f) + 10.\log_{10}(7,74.10^{21}.Ndist^{0,6}.L.f^2) + \mathrm{Hlog}(f)$$

$$QLN(f) = \max(FextPSD(f), NoiseFloor)$$

$$SNR(f) = RxPSD(f) - QLN(f)$$

with $SNR_{gap}$ being predetermined, for instance $SNR_{gap}$=9.75dB, and $SNR(f_i)$ being the signal-to-noise ratio for frequency/carrier i.

It will be appreciated by the skilled person that the estimation of the number of disturbers, according to embodiments of the present invention, provides a relatively simple metric which quantifies the noise level impacting a DSL line, making the diagnosis of potential problems (e.g. unbalanced loop, untwisted wires, abnormal crosstalk, ...) much easier.

The estimate of the (equivalent) number of disturbers, according to embodiment of the present invention, is loop length independent. This scalar value can be used directly to quantify the noise power present on the line, without having to take into account the loop length.

Moreover, in the state of the art approach for determining an abnormal noise level on a DSL line, the QLN is part of the carrier data. This makes it technically impossible to collect it for all the lines of a DSL network in an acceptably short period of time, such that the information cannot be used optimally.

In the description of certain embodiments according to the present invention, various features are sometimes grouped together in a single embodiment, figure, or description thereof for the purpose of aiding in the understanding of one or more of the various inventive aspects. This is not to be interpreted as if all features of the group are necessarily present to solve a particular problem. Inventive aspects may lie in less than all features of such a group of features present in the description of a particular embodiment.

While some embodiments described herein include some but not other features included in other embodiments, combinations of features of different embodiments are meant to be within the scope of the invention, and form different embodiments, as would be understood by the skilled person.

## Claims

1. A method for determining a noise level on a data transmission line having a certain length, in particular on a DSL line, comprising:

   - measuring parameter values of said data transmission line;
   - receiving said parameter values by a computing means;
   - extracting a scalar value representing a degree of electromagnetic interference on said transmission line from said parameter values, said scalar value being independent of the line length, by said computing means;
   - displaying said scalar value on a graphical user interface; **characterised in that**

   said step of measuring parameter values comprises measuring transmitted power, noise margin, actual bitrate and line attenuation; and **in that**
   said step of extracting said scalar parameter comprises

   - determining a transmitted power spectral density based on at least said transmitted power;
   - determining a transfer function for said line based on at least said line attenuation;
   - determining a number of disturbers based on at least said transmitted power spectral density and said transfer function of said line; and **in that** said step of determining a number of disturbers is realized by means of a numerical search algorithm that makes an estimated net attainable data rate equal to said actual bitrate;

   said estimated net attainable data rate being calculated based on an estimated signal-to-noise ratio which is equal to the difference of an estimated received signal power spectral density and an estimated quiet-line-noise and wherein
   said estimated received signal power spectral density is equal to the difference of said transmitted signal power spectral density and said line transfer function; and
   said estimated quiet-line-noise being calculated based upon at least a FEXT model and a receiver noise floor with said FEXT model being dependent on a loop length of said data transmission line and on said number of disturbers.

2. A computing means for determining a noise level on a data transmission line having a certain length, in particular on a DSL line, said computing means being adapted for:

   - receiving parameter values of said data transmission line;

- extracting a scalar value representing a degree of electromagnetic interference on said transmission line from said parameter values, said scalar value being independent of the line length, by said computing means;
- outputting said scalar value towards a graphical user interface;

**characterised in that** said computing means is further adapted for, when said parameter values comprise transmitted power, noise margin, actual bit rate and line attenuation:

- determining a transmitted power spectral density based on at least said transmitted power;
- determining a transfer function for said line based on at least said line attenuation;
- determining a number of disturbers based on at least said transmitted power spectral density, said transfer function of said line, said noise margin, and said actual bitrate; and **in that**

said step of determining a number of disturbers is realized by means of a numerical search algorithm that makes an estimated net attainable data rate equal to said actual bitrate; said estimated net attainable data rate being calculated based on an estimated signal-to-noise ratio which is equal to the difference of an estimated received signal power spectral density and an estimated quiet-line-noise and wherein said estimated received signal power spectral density is equal to the difference of said transmitted signal power spectral density and said line transfer function; and said estimated quiet-line-noise is calculated based upon at least a FEXT model and a receiver noise floor with said FEXT model being dependent on a loop length of said data transmission line and on said number of disturbers.

## Patentansprüche

1. Verfahren zur Bestimmung eines Rauschpegels auf einer Datenübertragungsleitung, welche eine bestimmte Länge aufweist, insbesondere auf einer DSL-Leitung, umfassend:

   - Messen der Parameterwerte der besagten Datenübertragungsleitung;
   - Empfangen der besagten Parameterwerte an einem Rechenmittel;
   - Extrahieren, durch das besagte Rechenmittel, eines skalaren Wertes, welcher einen Grad der elektromagnetischen Interferenz auf der besagten Übertragungsleitung darstellt, aus den besagten Parameterwerten, wobei der besagte skalare Wert von der Leitungslänge unabhängig ist;
   - Anzeigen des besagten skalaren Wertes auf einer grafischen Benutzeroberfläche; **dadurch gekennzeichnet, dass**

   der besagte Schritt des Messens der Parameterwerte das Messen der übertragenen Leistung, des Noise-Margin, der aktuellen Bitrate und der Leitungsdämpfung umfasst; und dass
   der besagte Schritt des Extrahierens des skalaren Parameters umfasst:

   - Bestimmen einer Spektraldichte der übertragenen Leistung auf Basis zumindest der besagten übertragenen Leistung;
   - Bestimmen einer Übertragungsfunktion für die besagte Leistung auf Basis zumindest der besagten Leitungsdämpfung;
   - Bestimmen einer Anzahl von Störern auf Basis zumindest der besagten Spektraldichte der übertragenen Leistung und der besagten Übertragungsfunktion der besagten Leitung; und dass der besagte Schritt des Bestimmens einer Anzahl von Störern anhand eines numerischen Suchalgorithmus, durch welchen eine geschätzte erreichbare Nettodatenrate der besagten aktuellen Bitrate gleichgesetzt wird, durchgeführt wird; wobei die besagte geschätzte erreichbare Nettodatenrate auf Basis eines geschätzten Signal-Rausch-Verhältnisses, welches der Differenz zwischen einer geschätzten Spektraldichte der empfangenen Signalleistung und einem geschätzten Leerkanalrauschen entspricht, berechnet wird, und wobei

   die besagte geschätzte Spektraldichte der empfangenen Signalleistung der Differenz zwischen der besagten Spektraldichte der übertragenen Signalleistung und der besagten Leitungsübertragungsfunktion entspricht; und wobei das besagte geschätzte Leerkanalrauschen auf Basis zumindest eines FEXT-Modells und eines Grundrauschens des Empfängers berechnet wird, wobei das besagte FEXT-Modell von einer Schleifenlänge der besagten Datenübertragungsleitung und von der besagten Anzahl von Störern abhängt.

2. Rechenmittel zur Bestimmung eines Rauschpegels auf einer Datenübertragungsleitung, welche eine bestimmte Länge aufweist, insbesondere auf einer DSL-Leitung, wobei das besagte Rechenmittel für das Durchführen der folgenden Schritte ausgelegt ist:

- Empfangen von Parameterwerten der besagten Datenübertragungsleitung;
- Extrahieren eines skalaren Wertes, welcher einen Grad der elektromagnetischen Interferenz auf der besagten Übertragungsleitung darstellt, aus den besagten Parameterwerten, wobei der besagte skalare Wert von der Leitungslänge unabhängig ist, durch das besagte Rechenmittel;
- Ausgeben des besagten skalaren Wertes an eine grafische Benutzeroberfläche; **dadurch gekennzeichnet, dass** das besagte Rechenmittel weiterhin dazu ausgelegt ist, die folgenden Schritte durchzuführen, wenn die besagten Parameterwerte die übertragene Leistung, den Noise-Margin, die aktuelle Bitrate und die Leitungsdämpfung umfasst:
- Bestimmen einer Spektraldichte der übertragenen Leistung auf Basis zumindest der besagten übertragenen Leistung;
- Bestimmen einer Übertragungsfunktion für die besagte Leitung auf Basis zumindest der besagten Leitungsdämpfung;
- Bestimmen einer Anzahl von Störern auf Basis zumindest der besagten Spektraldichte der übertragenen Leistung, der besagten Übertragungsfunktion der besagten Leitung, des besagten Noise-Margin und der besagten aktuellen Bitrate;

und dass der Schritt des Bestimmens einer Anzahl von Störern anhand eines numerischen Suchalgorithmus, durch welchen eine geschätzte erreichbare Nettodatenrate der besagten aktuellen Bitrate gleichgesetzt wird, durchgeführt wird;
wobei die besagte geschätzte erreichbare Nettodatenrate auf Basis eines geschätzten Signal-Rausch-Verhältnisses, welches der Differenz zwischen einer geschätzten Spektraldichte der empfangenen Signalleistung und einem geschätzten Leerkanalrauschen entspricht, berechnet wird, und
wobei die besagte geschätzte Spektraldichte der empfangenen Signalleistung der Differenz zwischen der besagten Spektraldichte der übertragenen Signalleistung und der besagten Leitungsübertragungsfunktion entspricht; und
wobei das besagte geschätzte Leerkanalrauschen auf Basis zumindest eines FEXT-Modells und eines Grundrauschens des Empfängers berechnet wird, wobei das besagte FEXT-Modell von einer Schleifenlänge der besagten Datenübertragungsleitung und von der besagten Anzahl von Störern abhängt.

## Revendications

**1.** Procédé de détermination d'un niveau de bruit sur une ligne de transmission de données ayant une certaine longueur, notamment sur une ligne DSL, comprenant les étapes suivantes :

- mesures des valeurs des paramètres de ladite ligne de transmission de données ;
- réception desdites valeurs des paramètres par des moyens de traitement informatique ;
- extraction d'une valeur scalaire représentant un degré d'interférence électromagnétique sur ladite ligne de transmission à partir desdites valeurs des paramètres, ladite valeur scalaire étant indépendante de la longueur de la ligne, par lesdits moyens de traitement informatique ;
- affichage de ladite valeur scalaire sur une interface utilisateur graphique ; **caractérisé en ce que**

ladite première étape de mesure des valeurs des paramètres comprend la mesure de la puissance émise, de la marge de bruit, du débit binaire réel et de l'atténuation en ligne ; et **en ce que** ladite étape d'extraction dudit paramètre scalaire comprend

- détermination d'une densité spectrale de puissance émise en se basant sur au moins ladite puissance émise ;
- détermination d'une fonction de transfert pour ladite ligne en se basant sur au moins ladite atténuation en ligne ;
- détermination d'un nombre d'éléments perturbateurs en se basant au moins sur ladite densité spectrale de puissance émise et ladite fonction de transfert pour ladite ligne ; et **en ce que** ladite étape de détermination d'un nombre d'éléments perturbateurs est réalisée au moyen d'un algorithme de recherche numérique qui rend un débit de données net pouvant être atteint égal audit débit binaire réel ;

ledit débit de données net pouvant être atteint étant calculé en se basant sur un rapport signal/bruit estimé qui est égal à la différence entre une densité spectrale de puissance estimée du signal reçu et un bruit estimé de la ligne au repos et ladite densité spectrale de puissance estimée du signal reçu étant égale à la différence entre ladite densité spectrale de puissance du signal émis et ladite fonction de transfert de ligne ; et ledit bruit estimé de la ligne au repos étant calculé en se basant sur au moins un modèle FEXT et un plancher de bruit du récepteur, ledit modèle FEXT étant dépendant d'une longueur de boucle de ladite ligne de transmission de données et dudit nombre d'éléments perturbateurs.

2. Moyens de traitement informatique pour déterminer un niveau de bruit sur une ligne de transmission de données ayant une certaine longueur, notamment sur une ligne DSL, lesdits moyens de traitement informatique étant adaptés pour :

    - réception des valeurs des paramètres de ladite ligne de transmission de données ;
    - extraction d'une valeur scalaire représentant un degré d'interférence électromagnétique sur ladite ligne de transmission à partir desdites valeurs des paramètres, ladite valeur scalaire étant indépendante de la longueur de la ligne, par lesdits moyens de traitement informatique ;
    - délivrance de ladite valeur scalaire vers une interface utilisateur graphique ; **caractérisés en ce que** lesdits moyens de traitement informatique sont en outre adaptés pour, lorsque lesdites valeurs des paramètres comprennent la puissance émise, la marge de bruit, le débit binaire réel et l'atténuation en ligne :
    - détermination d'une densité spectrale de puissance émise en se basant sur au moins ladite puissance émise ;
    - détermination d'une fonction de transfert pour ladite ligne en se basant sur au moins ladite atténuation en ligne ;
    - détermination d'un nombre d'éléments perturbateurs en se basant au moins sur ladite densité spectrale de puissance émise, ladite fonction de transfert de ladite ligne et ledit débit binaire réel ; et **en ce que** ladite étape de détermination d'un nombre d'éléments perturbateurs est réalisée au moyen d'un algorithme de recherche numérique qui rend un débit de données net pouvant être atteint égal audit débit binaire réel ;

ledit débit de données net pouvant être atteint étant calculé en se basant sur un rapport signal/bruit estimé qui est égal à la différence entre une densité spectrale de puissance estimée du signal reçu et un bruit estimé de la ligne au repos et ladite densité spectrale de puissance estimée du signal reçu étant égale à la différence entre ladite densité spectrale de puissance du signal émis et ladite fonction de transfert de ligne ; et ledit bruit estimé de la ligne au repos est calculé en se basant sur au moins un modèle FEXT et un plancher de bruit du récepteur, ledit modèle FEXT étant dépendant d'une longueur de boucle de ladite ligne de transmission de données et dudit nombre d'éléments perturbateurs.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6760847 B
- US 20090323903 A